Europäisches Patentamt

European Patent Office

Office européen des brevets

(11) Veröffentlichungsnummer: **0 189 493**
**B1**

(12) # EUROPÄISCHE PATENTSCHRIFT

(45) Veröffentlichungstag der Patentschrift:
21.06.89

(51) Int. Cl.⁴: **H 01 H  83/00**, H 02 H  3/33,
H 01 R 13/713

(21) Anmeldenummer: 86100633.4

(22) Anmeldetag: 28.01.86

(54) Als Anschlussstecker ausgebildetes FI-Schutzschaltgerät.

(43) Veröffentlichungstag der Anmeldung:
06.08.86 Patentblatt 86/32

(45) Bekanntmachung des Hinweises auf die Patenterteilung:
21.06.89 Patentblatt 89/25

(84) Benannte Vertragsstaaten:
AT BE CH DE FR GB IT LI NL SE

(56) Entgegenhaltungen:
DE-A-2 009 375
DE-A-2 211 303
DE-B-1 178 932
DE-B-2 204 418
FR-A-2 454 196
LU-A-58 909

(73) Patentinhaber: Heinrich Kopp GmbH & Co. KG,
Alzenauer Strasse 68- 70 (Postfach 80), D-8756
Kahl/Main (DE)

(72) Erfinder: Flohr, Peter, Mittelweg 47, D-8754
Grossostheim 2 (DE)
Erfinder: Barucha, Heinrich, Posener Strasse 9b,
D-6450 Hanau (DE)

(74) Vertreter: Beckmann, Gerhard, Röntgenweg 1,
D-5880 Lüdenscheid/Westf. (DE)

## Beschreibung

Die Erfindung bezieht sich auf ein als Anschlußstecker ausgebildetes Fehlerstrom-Schutzschaltgerät. Ein solches Verbindungselement ist im Austausch gegen den gebräuchlichen Schutzkontaktstecker fest an der Zuleitung von Elektrogeräten angeschlossen, bei denen die Möglichkeit des Auftretens von gefährlichen Berührungsspannungen besonders hoch und es nicht unbedingt sichergestellt ist, daß das beanspruchte Leitungsnetz intakt und der benutzte Stromkreis innerhalb der stationären Hausinstallationsanlage entsprechend durch einen besonderen Fehlerstromschutzschalter abgesichert ist.

Derartig "geschützte" Anschlußstecker sind bereits bekannt. So enthält z. B. ein von der Anmelderin entwickeltes Steckverbindungselement zur Verwendung an der Zuleitung elektrisch betriebener Gartengeräte, Heimwerkermaschinen und Haushaltsgeräte einen in das erweiterte Steckergehäuse integrierten Differenzstrom-Schutzschalter, der das angeschlossene Gerät beim Auftreten von Fehlerströmen sofort zweipolig vom Versorgungsnetz abschaltet (z. B. DE-A-3 412 273).

Bei der Benutzung einer solchen Schutzeinrichtung im Verbund mit dem Anschlußstecker kann jedoch nicht verhindert werden, daß nach Behebung irgendeines Defekts ein versehentlich eingeschaltet verbliebenes Elektrogerät der genannten Art, wie besonders ein Rasenmäher oder eine Handbohrmaschine, unbeaufsichtigt wieder anläuft und Schaden anrichtet. Um dieses mit Sicherheit zu vermeiden, hat man bereits die Elektrogeräte selbst mit einer Vorrichtung zur Unterspannungsauslösung versehen, die bei funktionswidrigem Absinken oder bei vollständigem Ausfall der Betriebsspannung nicht nur das angeschlossene Elektrogerät allpolig abschaltet, sondern auch dessen Wiederinbetriebnahme an die erneute Einschaltbetätigung bindet. Im Hinblick auf den hierfür erforderlichen Platzbedarf wurde eine solche Vorrichtung bislang nur vereinzelt unmittelbar in die diesbezüglich besonders anfälligen Elektrogeräte eingebaut.

Ein weiteres Sicherheitsproblem bei der Benutzung des in seinem Steckerbereich nur durch eine normale Fehlerstromschutzschaltung geschützten Elektrogeräts ergibt sich aus folgenden Überlegungen: Bei einer vorschriftsgemäßen und intakten Hausinstallation bis zur Steckdose hin funktionieren diese hochempfindlichen Schutzschaltgeräte einwandfrei. Ist die betreffende Installation jedoch insofern fehlerhaft angelegt, als dabei der Schutzleiter PE mit dem Phasenleiter L verwechselt wurde, so liegt in diesem Fall die volle Netzspannung über den Schutzleiter PE am Gehäuse des intakten Elektrogeräts, ohne daß das in dessen Zuleitung eingeschleifte Schutzschaltgerät im Berührungsfall zweckentsprechend abschalten kann. Um einer solchen Fehlinstallation gegenüber dennoch einen Schutz zu gewährleisten, hat man in Betracht gezogen, den Schutzleiter PE ebenfalls zu überwachen und gemeinsam mit dem Phasenleiter L und dem Neutralleiter N abzuschalten. Dazu ist es erforderlich, auch den Schutzleiter PE durch den Summenstromwandler zu führen, damit beim Fließen eines Fehlerstroms über die berührende Person zur Erde die Auslösung überhaupt bewirkt werden kann. Diese Maßnahme erweist sich jedoch als wirkungslos, wenn z. B. ein defektes Bügeleisen auf einem geerdeten Kochherd oder ähnlichem abgestellt wird und dadurch ein Teilstrom direkt zur Erde abfließen kann. Dennoch liegt bei dem betreffenden Installationsfehler die volle Netzspannung solange am Gehäuse des intakten Elektrogeräts, bis durch das Berühren der Fehlerstrom durch den menschlichen Körper zum Fließen kommt. Dieser Vorgang kann bekanntlich zu tödlichen Sekundärunfällen führen.

Ein anderer Nachteil der bekannten Fehlerstromschutzschaltungen liegt in der Funktionsweise der dazugehörigen Prüfeinrichtung begründet. Bei dieser Einrichtung wird durch das Betätigen der Prüftaste ein künstlicher Fehlerstrom zwischen dem Phasenleiter L und dem Neutralleiter N bewirkt, der das Schutzschaltgerät auslöst. Insofern wird der Prüfstromkreis mit der Netzspannung betrieben und lediglich die Funktionsfähigkeit des Schutzschaltgeräts überprüft; nicht aber, ob die benutzte Installation überhaupt dazu imstande ist, der Schutzmaßnahme zu genügen. Die FI-Schutzschaltung ist jedoch eine Schutzleiter-Schutzmaßnahme. Da der Schutzleiter aber für den eigentlichen Betrieb der angeschlossenen Verbraucher nicht benötigt wird, kommt es in der Praxis häufig vor, daß dieser innerhalb der Anlage unterbrochen ist oder garnicht an einem Steckdosenanschluß zur Verfügung steht. Dann aber wird dem Benutzer der Anlage beim Betätigen der Prüftaste die einwandfreie Funktion des Schutzschalters an seinem Elektrogerät vorgetäuscht, obwohl in Wirklichkeit gar kein vorschriftsmäßiger Schutz vorhanden ist.

Mithin liegt der Erfindung die Aufgabe zugrunde, ein als Anschlußstecker ausgebildetes Fehlerstrom-Schutzgerät nicht nur in sich zugleich mit einer Einrichtung zur Unterspannungsauslösung zu versehen, sondern diese Kombination darüber hinaus auch mit einer Prüfeinrichtung auszustatten, die es dem Benutzer ermöglicht, den ordnungsgemäßen Zustand der in Anspruch genommenen Anlage selber zu überprüfen und damit zu seiner eigenen Sicherheit den vorschriftsmäßig gebotenen Schutzpegel weiter zu erhöhen.

Zur Lösung dieser Aufgabe legt die Erfindung ein als Anschlußstecker ausgebildetes FI-Schutzschaltgerät nach dem Oberbegriff des Patentanspruchs 1 schaltungsmäßig dahingehend aus, daß die von den Stift- und Schutzkontakten des Steckers zu den Anschlußklemmen verlaufenden drei Leitungsadern allpolig von Hand durch einen Druckknopf schaltbar und gemeinsam, jedoch mit dem Schutzleiter in entgegengesetzter Richtung zu dem Phasen- und dem Neutralleiter, durch einen Summenstromwandler geführt sind, der über eine erste Sekundärwicklung zur Steuerung einer durch den Druckknopf voreilend an das Netz schaltbaren Elektronik für die Differenzstrom- und Unterspannungsauslösung mit elektromagnetischer Wirkung auf die Mechanik der Schaltkontaktanordnung verfügt und eine zweite Hilfswicklung aufweist, über welche der Schutzleiter anschlußseitig durch je einen Arbeitskontakt einer federbelasteten Prüftaste und eine vorgeschaltete Widerstandsanordnung zugleich mit dem Phasen- und dem Neutralleiter verbindbar ist.

Mit dieser Anordnung wird in vorteilhafter Weise zunächst folgendes erreicht: Nimmt man in einem Installationssystem mit klassischer Nullung als möglichen Anlagenfehler die Verwechslung von Phasen- und Schutzleiter an, so gelangt nicht nur die volle Netzspannung an das Gehäuse eines an sich intakten Elektrogeräts, ein vorhandener Schutzschalter kann diesen Fehler nicht erkennen und daher auch nicht auslösen. Wird dementgegen auch ein gesondert vorhandener Schutzleiter mit durch den Summenstromwandler geführt und hinzu gemeinsam mit dem Haupt- und dem Neutralleiter abgeschaltet, so ist eine Gefährdung des Benutzers zwar ausgeschlossen. Wird jedoch ein derartig geschütztes Elektrogerät an eine intakte Steckdose angeschlossen, so heben sich beim Auftreten eines Masseschlusses die durch die Phasen-, Neutral- und Schutzleiter zu- und abfließenden Ströme im Wandler gegeneinander auf, so daß eine Differenzstromauslösung nicht zustande kommen kann. Wenn dagegen der Schutzleiter erfindungsgemäß in entgegengesetzter Richtung zu dem Phasen- und dem Neutralleiter durch den Summenstromwandler geführt wird, dann erkennt das Schutzschaltgerät auch einen solchen Fehlerstrom und leitet entsprechend die Auslösung ein.

Ein weiterer Vorteil des erfindungsgemäßen Schutzschaltgeräts ergibt sich unter folgendem Gesichtspunkt: Bei elektronisch gesteuerten Schutzeinrichtungen ist es von Nutzen, wenn im ausgeschalteten Zustand des überwachten Elektrogeräts auch die Schaltelemente der Elektronik stromlos werden, um einen unnötigen Energieverbrauch zu vermeiden. Trotzdem ist es notwendig, daß bei einem Schutzschaltgerät nach Art der Erfindung, d.h. mit zusätzlicher Unterspannungsauslösung, für den Einschaltvorgang die Netzspannung bereits an dem elektromagnetischen Auslöseorgan liegen muß, um das Schutzschaltgerät überhaupt in Betrieb nehmen zu können. Hierzu ist eine Hilfskontaktanordnung erforderlich, welche die Elektronik im Ausschaltzustand abschaltet und sie beim Einschalten an Spannung legt, bevor die eigentliche Schaltkontaktanordnung des Schutzschaltgeräts geschlossen wird; und dies beim Ausschalten in der umgekehrten Reihenfolge. Der betreffende Vorgang wird gemäß der Erfindung von der Betätigungshandhabe des Schutzschaltgeräts übernommen, wozu diese als Druckknopf mit Doppelfunktion ausgebildet ist.

Die Prüfeinrichtung des Schutzschaltgeräts betreffend, wird diese vorteilhafterweise mit Kleinspannung (24 Volt) gegen den Schutzleiter betrieben. Demgemäß wird mit dem Betätigen der 2-poligen Prüftaste in einem Stromkreis zwischen dem Phasen- und dem Neutralleiter über einen Spannungsteiler mit Schutzwiderstand gegen den Schutzleiter in einer Hilfswicklung des Summenstromwandlers ein Fehlerstrom simuliert, der das Schutzschaltgerät kontrollweise nur bei intaktem Schutzleiter zur Auslösung bringt. Ist der Schutzleiter dagegen unterbrochen oder das Gerät selber defekt, so wird dies dem Benutzer durch Nichtauslösen des Schutzschaltgeräts angezeigt.

In dieser Kombination von Einzelmaßnahmen stellt die Erfindung ein Schutzschaltgerät vor, das den zu überwachenden Verbraucher in jedem vorkommenden Fehlerfall allpolig vom Versorgungsnetz trennt und somit auch den möglicherweise spannungsführenden Schutzleiter unterbricht. Außerdem ermöglicht es die besondere Prüfeinrichtung, zur gleichen Zeit die Wirksamkeit des Schutzschalters wie auch den ordnungsgemäßen Zustand der in Verbindung mit dem angeschlossenen Elektrogerät in Anspruch genommenen stationären Installationsanlage zu kontrollieren.

Die weiteren Merkmale des in Anspruch 1 gekennzeichneten Erfindungsgegenstandes sind als vorteilhafte Ausbildungen desselben in den nachgeordneten Unteransprüchen 2 bis 12 erfaßt. Hierbei richten sich die Ansprüche 2 bis 4 auf die Form und Ausführung des als Anschlußstecker benutzten Schutzschaltgeräts und die Ansprüche 5 bis 10 auf dessen Einrichtungen in konstruktivmechanischer wie elektrischer Beziehung, während die Ansprüche 11 und 12 die anschlußmäßige Ausstattung des Geräts erfassen. Im einzelnen wie im Zusammenwirken wird auf diese Merkmale in der nachfolgenden Beschreibung nochmals näher eingegangen.

In der anliegenden Zeichnung ist ein typisches Ausführungsbeispiel der Erfindung dargestellt. Dabei zeigt:

Fig. 1    den Stromlaufplan des Schutzschaltgeräts in vereinfachter Form;

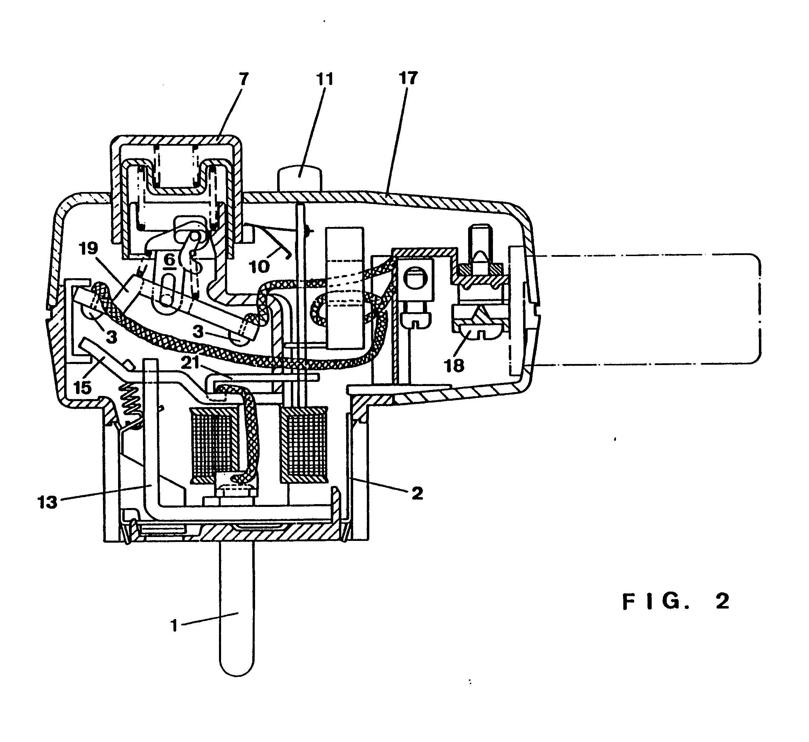

Fig. 2    einen Längsschnitt durch das Gerät in der Ausschaltstellung;

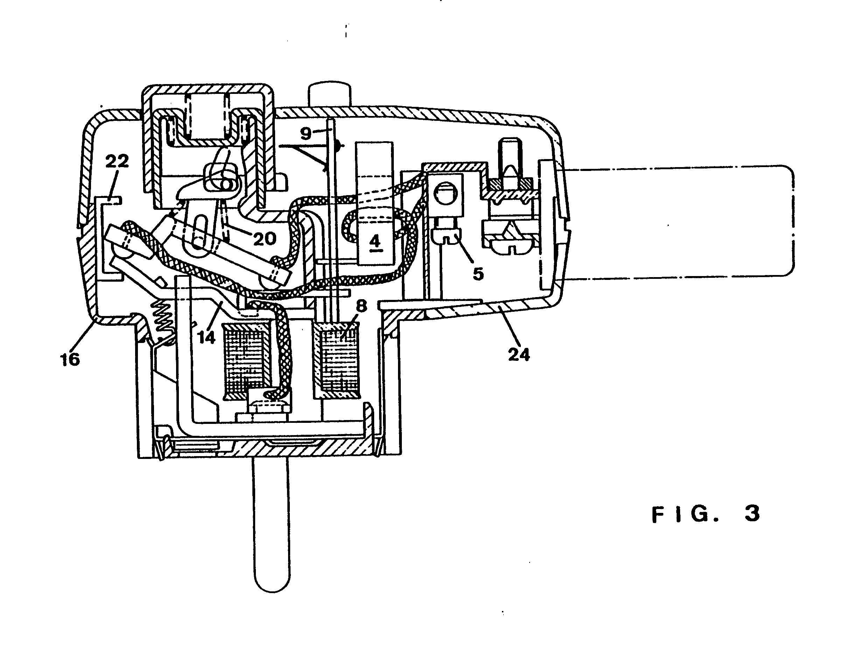

Fig. 3    die geschnittene Darstellung gemäß Fig. 2 in der Einschaltstellung; und

Fig. 4    einen Querschnitt durch das Gerät bei abgenommener Gehäuse-Oberschale.

Fig. 5 zeigt in teilweise geschnittener Darstellung eine Seitenansicht und die Draufsicht des innerhalb eines gemeinsamen Gehäuses mit einer Schutzkontaktsteckdose zusammengestellten Geräts als montagemäßige Abdeckung für eine festinstalliert eingebaute Unterputz-Steckdose.

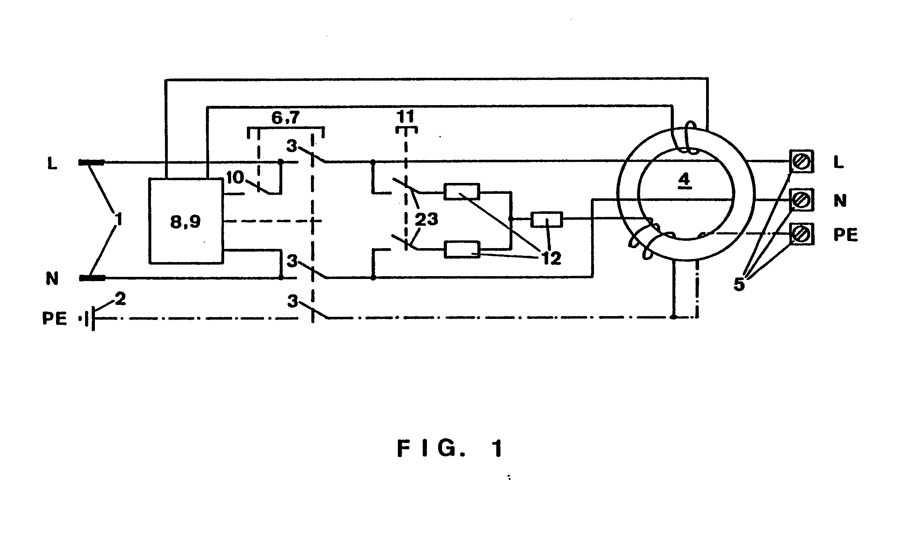

Wie aus dem Stromlaufplan nach Fig. 1 der Zeichnung hervorgeht, verlaufen der Phasenleiter L, der Neutralleiter N und der Schutzleiter PE jeweils von den beiden Steckerstiften 1 und dem Schutzkontaktbügel 2 des Anschlußsteckers im Inneren des Schutzschaltgeräts über die 3-polige Schaltkontaktanordnung 3 und durch den ringförmigen Summenstromwandler 4 zu den entsprechenden Anschlußklemmen 5 für das Zuleitungskabel eines Elektrogeräts. Hierbei ist der strichpunktiert eingezeichnete Schutzleiter in entgegengesetzter Richtung zu dem Phasen- und dem Neutralleiter durch den Summenstromwandler 4 geführt. Auf diese Weise erzeugt auch bei einer fehlerhaften Verwechslung von Phasen- und Schutzleiter ein etwa auftretender Masseschluß einen Differenzstrom, den der Summenstromwandler 4 dann zur Auslösung weiterleitet. Die Schaltkontaktanordnung 3 läßt sich mit dem auf eine (hier nicht dargestellte) Schaltmechanik (6) wirkenden Druckknopf 7 von Hand betätigen und wird im Fehlerfall elektronisch gesteuert durch den (Unterspannungs-)Auslösemagneten 8 allpolig abgeschaltet. Dabei wird die eingebaute Elektronik 9 über einen Hilfskontakt 10 aus dem Netz mit Spannung versorgt, welcher mit dem Druckknopf 7 gekoppelt ist und dessen Schaltbewegung vor- bzw. nacheilend folgt. Gesteuert wird die Elektronik 9 aus der Sekundärwicklung des Summenstromwandlers 4, wobei sich der Auslösemagnet 8 zuvor jedoch nur dann in seiner Einschaltposition halten kann, wenn die Netzspannung vorhanden ist. Zur Überprüfung der Funktionsfähigkeit des Schutzschaltgeräts ist die 2-polige Prüftaste 11 vorgesehen, durch deren Betätigung die einerseits mit dem Schutzleiter verbundene Hilfswicklung des Summenstromwandlers 4 andererseits über die Widerstandsanordnung 12 simultan an den Phasen- und an den Neutralleiter gelegt wird. Dadurch erstreckt sich der Prüfvorgang zur gleichen Zeit auch auf eine eventuelle Unterbrechung des Schutzleiters innerhalb der Hausinstallation.

Die Anordnung der Bauteile und Funktionselemente des Schutzschaltgeräts ist aus den Fig.n 2 bis 4 der Zeichnung ersichtlich. Zur besseren Übersicht sind dabei die verwendeten Bezugsziffern auf die in der Wiedergabe sich entsprechenden Darstellungen der Fig.n 2 und 3 verteilt. Demgemäß nimmt der außenseitig mit den beiden Steckerstiften 1 und den Berührungskontakten des Schutzkontaktbügels 2 versehene (genormte) Einsteckteil des Geräts das nach Art eines Klappankerrelais' ausgebildete elektromagnetische Auslöseorgan 8 in sich auf. Dabei ist dessen Magnetjoch 13 leitend mit dem Schutzkontaktbügel 2 verbunden und im Übergangsbereich zwischen Einsteckteil und Gehäuse mit einer Drehlagerstelle für den Klappanker 14 versehen, der sich seitlich in einen entgegen der Anzugrichtung federbelasteten Kontakt- und Kopplungsausleger 15 fortsetzt.

Das dem Einsteckteil formschlüssig angesetzte Gehäuse ist quergeteilt und gliedert sich in eine Unterschale 16, in der die mechanischen und elektrischen Bauelemente des Geräts untergebracht sind, während der damit verrastenden und/oder verschraubbaren Oberschale 17 (über die Lagerung der Prüftaste hinaus) nur eine Abdeckfunktion zukommt. Demgemäß sind innerhalb der dafür entsprechend ausgestalteten Unterschale 16 neben der über die druckknopfbetätigte Schaltmechanik 6 mit dem Auslösemagneten 8 zusammenwirkenden Schaltkontaktanordnung 3, in Längsrichtung aufeinander folgend, die auf einer gedruckten Leiterplatte zusammengefaßte Elektronik 9, der Summenstromwandler 4 und die vor der Zugentlastungseinrichtung 18 gelegenen Anschlußklemmen 5 für das Zuleitungskabel des Elektrogeräts angeordnet und schaltungsgemäß untereinander verdrahtet.

Der zur Betätigung des Schutzschaltgeräts vorgesehene Druckknopf 7 wirkt in bewegungsmäßig-zeitlicher Folge auf zwei gesonderte Kontakteinrichtungen (3, 10) und ist hierfür in sich zweiteilig ausgebildet. Insofern besteht er aus zwei koaxial ineinander sowie in Relation zu der Gehäuse-Unterschale 16 teleskopartig geführten Teileelementen, die untereinander sowie gegen einen Gehäuseanschlag mit Hilfe von Schraubendruckfedern unterschiedlicher Steifigkeit abgestützt sind. Aufgrund dessen hat die Betätigung des Druckknopfs 7 zunächst eine Relativbewegung des äußeren Teileelements zu dem inneren Teileelement zur Folge, wodurch die an der gedruckten Leiterplatte (9) angebrachte Kontaktanordnung 10 für die Stromversorgung der Elektronik 9 zur Vorbereitung des Einschalt- und Überwachungsvorgangs geschlossen wird. Danach bewirkt das weitere bzw. vollständige Eindrücken des Druckknopfs 7 die Mitnahme des inneren Teileelements im Hinblick auf die damit gekoppelte Schaltmechanik 6. Diese Mechanik 6 stellt sich im wesentlichen als eine durch das innere Teileelement des Druckknopfs 7 verstellbare Strebe (6) dar, die dabei vermittels eines Querstifts in einer Kulisse zweier Seitenstege der Unterschale 16 dreh- und verschiebbar geführt wird. Außerdem besitzt die Strebe 6 nach unten hin einen zylindrischen Ansatz, in dessen Längsschlitz der dreiarmige Isolierstoffhebel 19 als Kontaktträger drehbar gelagert ist und sich der Strebe 6 gegenüber vermittels der kegelstumpfförmigen Schaltfeder 20 abstützt. Dabei bewirkt diese Maßnahme, daß die nach der einen Seite hin an zwei Armen in den Isolierstoffhebel 19 eingenietete beweglichen Kontaktstücke (3) in Verbindung mit dem Phasen- und dem Neutralleiter, sowie das nach der anderen Seite hin an einem Arm angebrachte Kontaktstück (3) für den Schutzleiter, in 3-Punktauflage mit genügendem Kontaktdruck auf die entsprechend angeordneten festen Gegenkontaktstücke (21) treffen. Diesbezüglich werden die beiden Festkontaktstücke 21 für den Phasen- und den Neutralleiter zweckmäßigerweise auf dem Spulenkörper des Auslösemagneten 8 positioniert und in geeigneter Form mit der gedruckten Leiterplatte (9) wie mit den außengelegenen Steckerstiften 1 verbunden. Demgegenüber wird das dritte Festkontaktstück für den Schutzleiter von dem Kontakt- und Kopplungsausleger 15 des Klappankers 14 gebildet, der seinerseits über das Magnetjoch 13 des Auslösemagneten 8 elektrisch leitend mit dem Schutzkontaktbügel 2 am Einsteckteil des Geräts in Verbindung steht. Des weiteren besteht zwischen dem vorgenannten Ausleger 15 und dem Isolierstoffhebel 19 eine mechanische Kopplung durch den an der Schalenwandung verschiebbar geführten Mitnehmer 22. Damit wird im Fall einer Auslösung oder bei Nichteinschaltbarkeit des Geräts erreicht, daß der die vorhandenen Kontaktstrecken unter Wirkung der Schaltfeder 20 öffnende Isolierstoffhebel 19 den (seinerseits schwächer) federbelasteten Klappanker 14 schon wieder vorbereitend an den Magnetkern des Auslösemagneten 8 anlegt.

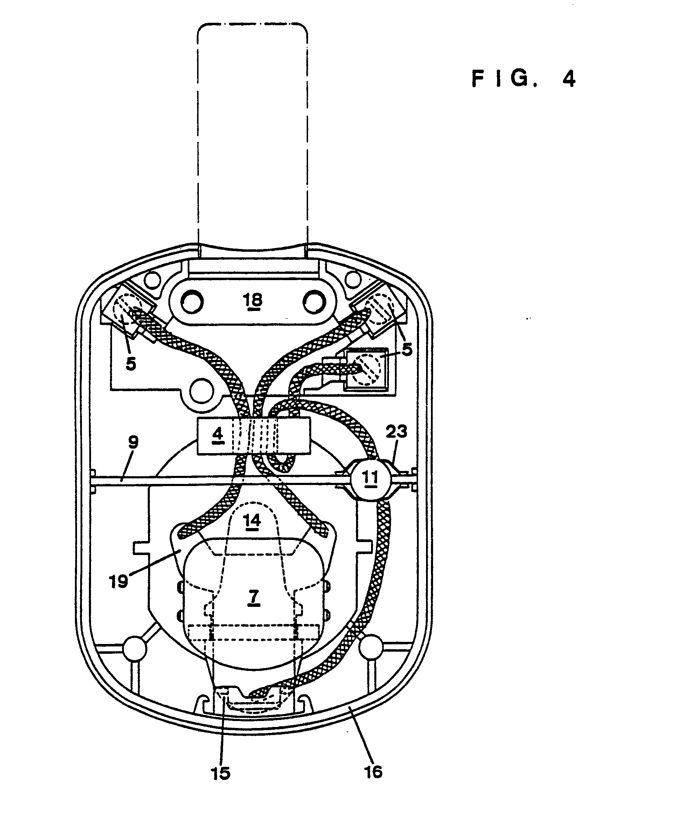

Für die bedienungsseitige Ausbildung der Prüfeinrichtung des Geräts ist aus Fig. 4 der Zeichnung ersichtlich, daß durch eine kurzzeitige Druckbetätigung der die Oberschale 17 des Gehäuses gegen die Kraft einer Druckfeder durchgreifenden Prüftaste 11 vermittels der von dieser getragenen Schleifkontaktstücke 23 an beiden Seiten der gedruckten Leiterplatte (9) die entsprechend in den Prüfstromkreis einbezogenen Festkontaktstrecken überbrückt werden, um das Gerät kontrollweise zur Auslösung zu bringen.

Die nach dem Ausführungsbeispiel gewählten Steck- und Anschlußvorkehrungen (1, 2 und 5) betreffend, läßt sich das Gerät an Stelle des Schutzkontaktsteckers und/oder der Klemmvorrichtung für das anzuschließende Elektrogerät ebenso zweckgebunden und ohne besondere Hinweise z. B. auch mit der dreipoligen Steckerausführung und Rund- oder Flachstiften eines anderen Steckverbindungssystems versehen sowie an Stelle eines Leitungsanschlusses nach Art eines Zwischensteckers oder eines Adapters mit einer in die Gehäuseform des Schutzschaltgeräts einbezogenen Steckdose ausrüsten.

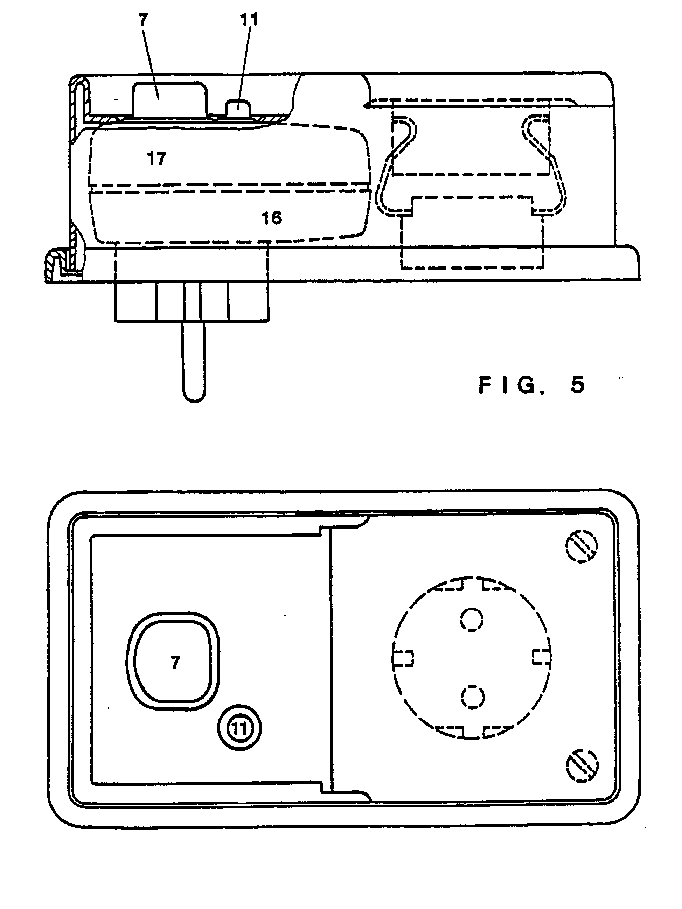

In dieser generellen Form und Ausbildung stellt sich der Gegenstand der Erfindung in fortschrittlicher Weise nicht nur als Ersatz für einen normalen Anschlußstecker dar, der es ermöglicht, das betreffende Elektrogerät und dessen Benutzer in einem bisher nicht erreichten Ausmaß gegen Gefährdung und Defekte im Bereich der benutzten Einrichtungen abzusichern. Desgleichen ergibt sich aufgrund der gedrängten Raumform, der verfügbaren Anschlußvorkehrungen und der beschriebenen Funktionen des Schutzschaltgeräts die vorteilhafte Möglichkeit, das an und für sich steckbare Gerät zusammen mit einer gesonderten Schutzkontaktsteckdose in ein etwa doppelt so groß dimensioniertes Aufputzgehäuse einzusetzen, wie dies in Fig. 5 der Zeichnung zur Darstellung gelangt, und die beiden Elemente gleich bei der Herstellung fertig miteinander zu verdrahten. Damit läßt sich diese Anordnung nach dem Entfernen der gebräuchlichen Außenabdeckung einer festinstallierten Schutzkontaktsteckdose in deren Steckdoseneinsatz einstecken und außerdem sicherheitshalber mit dem Aufputzgehäuse an der Wand befestigen, ohne daß es dazu besonderer Fertigkeit bedarf und hierbei die Herstellung irgendeiner elektrischen Verbindung erforderlich ist. Hinzu kann die angesetzte Steckdose gegenüber Feuchtigkeit mit einem Klappdeckelverschluß versehen sein. Auf diese Weise erreicht man auch in äußerst gefährdeten Räumen, wie z. B. Badezimmern u.dgl., für den Anschluß von Elektrogeräten im nachhinein einen erheblich höheren Schutzpegel als mit den bisher zu diesem Zweck bekanntgewordenen Einrichtungen; insbesondere dann, wenn die vorhandene Hausinstallation oder die festverlegten Leitungen den zentralen Einsatz des vorgeschriebenen Fehlerstromschutzschalters verwehren.

**Patentansprüche**

1. Als Anschlußstecker ausgebildetes FI-Schutzschaltgerät mit Unterspannungsauslösung (8), und Schutzleiter-Überwachungsmöglichkeit, wobei die von den Stift- und Schutzkontakten (1, 2) des Steckers zu den Anschlußklemmen (5) verlaufenden drei Leitungsadern allpolig von Hand durch einen Druckknopf (7) schaltbar und gemeinsam, jedoch mit dem Schutzleiter in entgegengesetzter Richtung zu dem Phasen- und dem Neutralleiter, durch einen Summenstromwandler (4) geführt sind, der über eine erste Sekundärwicklung zur Steuerung einer durch den Druckknopf (7) voreilend an das Metz schaltbaren Elektronik (9) für die Differenzstrom- und Unterspannungsauslösung mit elektromagnetischer Wirkung auf die Mechanik (6) der Schaltkontaktanordnung (3) verfügt und eine zweite Hilfswicklung aufweist, über welche der Schutzleiter anschlußseitig durch je einen Arbeitskontakt (23) einer federbelasteten Prüftaste (11) und eine vorgeschaltete Widerstandsanordnung (12) zugleich mit dem Phasen- und dem Neutralleiter verbindbar ist.

2. Schutzschaltgerät nach Anspruch 1, dadurch gekennzeichnet, daß das elektromagnetische Auslöseorgan (8) innerhalb des (genormten) Stecker-Einsteckteils angeordnet ist, wobei der U-förmige Schutzkontaktbügel (2) ggf. als Magnetjoch (13) (mit-)verwendet wird.

3. Schutzschaltgerät nach den Ansprüchen 1 und 2.
dadurch gekennzeichnet, daß dem Stecker-Einsteckteil ein aus zwei Halbschalen gebildetes quaderformähnliches Isolierstoffgehäuse angesetzt ist, dessen Unterschale (16) eine Ausnehmung zu dem Einsteckteil hin und seitlich daneben eine mittels einer verschraubbaren Kappe (24) abgedeckte Montageöffnung besitzt, während die damit unlösbar verrastende Oberschale (17) mit Durchtrittsöffnungen für den Druckknopf (7) und die Prüftaste (11) versehen ist.

4. Schutzschaltgerät nach den Ansprüchen 1 und 3,
dadurch gekennzeichnet, daß innerhalb der entsprechend ausgestalteten Unterschale (16) des Gehäuses in Längsrichtung nebeneinander die mit dem Druckknopf (7) über die Schaltmechanik (6) einschaltbare und manuell, elektromagnetisch sowie frei auslösbare Schaltkontaktanordnung (3), die auf einer gedruckten Leiterplatte zusammengefaßte Elektronik (9) für die Differenzstrom- und Unterspannungsauslösung samt einer Kontaktanordnung (10) zu deren Stromversorgung und für die Prüftaste (11), der Summenstromwandler (4), sowie die vor einer Zugentlastungseinrichtung (18) für das Verbindungskabel gelegenen Anschlußklemmen (5) angeordnet sind.

5. Schutzschaltgerät nach den Ansprüchen 1 und 4,
dadurch gekennzeichnet, daß der Druckknopf (7) in Doppelfunktion zur nacheinander erfolgenden Betätigung der Kontaktanordnung (10) für die Stromversorgung der Elektronik (9) und der Schaltmechanik (6) für die eigentliche Schaltkontaktanordnung (3) aus zwei koaxial ineinander sowie innerhalb des Gehäuses teleskopartig geführten Teilelementen besteht, die untereinander und gegen einen Gehäuseanschlag mit Hilfe von Schraubendruckfedern unterschiedlicher Steifigkeit abgestützt sind.

6. Schutzschaltgerät nach den Ansprüchen 1, 4 und 5,
dadurch gekennzeichnet, daß die über flexible Litzen mit den Anschlußklemmen (5) verbundenen beweglichen Kontaktstücke (3) der 3-poligen Schaltkontaktanordnung von einem dreiarmigen Isolierstoffhebel (19) getragen werden, der unter Wirkung einer Schaltfeder (20) beweglich mit der Schaltmechanik (6) gekoppelt ist und in bezug auf die Festkontaktstücke (15, 21) in Dreipunktauflage fungiert.

7. Schutzschaltgerät nach den Ansprüchen 1, 5 und 6,
dadurch gekennzeichnet, daß die mit den beiden Steckerstiften (1) verbundenen Festkontaktstücke (21) der Schaltstrecken für den Phasen- und den Neutralleiter mittelbar auf dem elektromagnetischen Auslöseorgan (8) oder seitlich über demselben innerhalb des Gehäuses gehaltert sind.

8. Schutzschaltgerät nach den Ansprüchen 1, 5 und 6,
dadurch gekennzeichnet, daß der Gegenkontakt des beweglichen Kontaktstücks (3) der Schaltstrecke für den Schutzleiter von einem Kontaktfortsatz (15) des elektrisch leitend mit dem Schutzkontaktbügel (2) an dem Stecker-Einsteckteil in Verbindung stehenden Klappankers (14) des elektromagnetischen Auslöseorgans (8) dargestellt ist.

9. Schutzschaltgerät nach den Ansprüchen 1, 2 und 8,
dadurch gekennzeichnet, daß der beweglich an dem Magnetjoch (13) des elektromagnetischen Auslöseorgans (8) gelagerte und entgegen seiner Anzugrichtung zugfederbelastete Klappanker (14) vermittels seines Kontaktfortsatzes (15) über einen im Gehäuse verschiebbar geführten Mitnehmer (22) mit dem Isolierstoffhebel (19) der Schaltkontaktanordnung (3) mechanisch gekoppelt ist.

10. Schutzschaltgerät nach den Ansprüchen 1 bis 9,
dadurch gekennzeichnet, daß die Schaltmechanik über eine durch den Druckknopf (7) verstellbare Strebe (6) mit einem zylindrischen Ansatz verfügt, in dessen Längsschlitz der dreiarmige Isolierstoffhebel (19) drehbar gelagert ist, während die Strebe (6) selbst in einer Kulisse des Gehäuses dreh- und verschiebbar geführt wird und sich dem Isolierstoffhebel (19) gegenüber mittels einer kegelstumpfförmigen Schaltfeder (20) abstützt.

11. Schutzschaltgerät nach den Ansrprüchen 1 bis 4,
dadurch gekennzeichnet, daß der Anschlußstecker mit den Stift- und Schutzkontakten (1, 2) zur Benutzung eines der (international) gebräuchlichen Steckverbindungssysteme versehen ist und/oder an Stelle der Anschlußklemmen (5) für den Zuleitungsanschluß in der Gehäuse-Oberschale (17) nach Art eines Zwischensteckers oder eines Adapters eine Steckdose vorgesehen ist.

12. Schutzschaltgerät nach den Ansprüchen 1 und 11,
dadurch gekennzeichet, daß das mit einer gesonderten Schutzkontaktsteckdose zusammengebaute wie elektrisch verdrahtete Gerät in einem Aufputzgehäuse angeordnet und mit demselben im Austausch gegen die gebräuchliche Außenabdeckung einer festinstallierten (Unterputz-)Steckdose in deren Steckdoseneinsatz einsteckbar ist.

## Claims

1. Fault-current (FI) protective circuit breaker in the form of a wall plug, having under-voltage trip means (8) and a facility for monitoring protective conductors, wherein the three conducting wires, which extend from the pin and safety contacts (1, 2) of the plug to the terminals (5), are manually switchable in an all-polar manner by means of a push-button (7) and are guided through a master current transformer (4) jointly, but with the protective conductor in the opposite direction relative to the phase conductor and neutral conductor, said transformer having a first secondary winding to control an electronic unit (9), which is connectable to the mains by means of the push-button (7) in a leading manner, for the electromagnetically tripping mechanism (6) of the switching contact arrangement (3) upon differential current and under-voltage, and said transformer has a second auxiliary winding which serves to connect the protective conductor simultaneously to the phase conductor and neutral conductor at the terminal end by means of a respective operating contact (23) of a springloaded testing key (11) and by means of a pre-connected resistance arrangement (12).

2. Protective circuit breaker according to claim 1, characterised in that the electromagnetic trip means (8) is disposed within the (standardised) plug insert portion, the U-shaped safety contact bridge member (2) possibly being used (jointly) as a magnet yoke (13).

3. Protective circuit breaker according to claims 1 and 2, characterised in that a housing of insulating material, which is formed from two half-shells and has a parallelepiped-like shape, is attached to the plug insert member, the lower shell (16) of said housing having a recess, which extends towards the insert member, and a mounting aperture, which is situated laterally adjacent thereof and is covered by a screw-connectable cap (24), while the upper shell (17), which locks non-detachably therewith, is provided with through-apertures for the push-button (7) and the testing key (11).

4. Protective circuit breaker according to claims 1 and 3, characterised in that the manually, electromagnetically and freely releasable safety contact arrangement (3), which is actuatable by the push-button (7) via the switching mechanism (6), the electronic unit (9), which is integrated on a printed circuit board, for the means for tripping upon differential current and under-voltage, together with a contact arrangement (10) for supplying power to said means, and for the testing key (11), the total current transformer (4), and the terminals (5), which are situated in front of a tension-relieving means (18) for the connecting cable, are disposed within the appropriately shaped lower shell (16) of the housing in a longitudinal direction alongside one another.

5. Protective circuit breaker according to claims 1 and 4, characterised in that the push-button (7), having the dual role of actuating the contact arrangement (10) for the supply of power to the electronic unit (9) and to the switching mechanism (6) for the actual safety contact arrangement (3), comprises two partial elements which extend coaxially in one another and within the housing in a telescopic-like manner and which are supported by one another and against a housing stop member by means of helical compression springs having different degrees of rigidity.

6. Protective circuit breaker according to claims 1, 4 and 5, characterised in that the displaceable contact parts (3) of the 3-pole safety contact arrangement are connected to the terminals (5) via flexible leads and are supported by a three-armed lever (19) of insulating material, which is coupled with the switching mechanism (6) so as to be displaceable by the action of a control spring (20) and operates in three-point contact relative to the fixed contact parts (15, 21).

7. Protective circuit breaker according to claims 1, 5 and 6, characterised in that the fixed contact parts (21) of the switching paths for the phase conductor and neutral conductor are connected to the two plug pins (1) and are retained indirectly on the electromagnetic trip means (8) or laterally thereabove within the housing.

8. Protective circuit breaker according to claims 1, 5 and 6, characterised in that the countercontact of the displaceable contact part (3) of the switching path for the protective conductor is represented by a contact extension (15) of the hinged armature (14) of the electromagnetic trip means (8), said armature being electrically conductively connected to the safety contact bridge member (2) on the plug insert portion.

9. Protective circuit breaker according to claims 1, 2 and 8, characterised in that the pivotal armature (14), which is displaceably mounted on the magnet yoke (13) of the electromagnetic trip means (8) and is loaded by a tension spring in opposition to its direction of attraction, is mechanically coupled with the lever (19) of insulating material of the safety contact arrangement (3) by means of its contact extension (15) via a carrier (22) which is displaceably guided in the housing.

10. Protective circuit breaker according to claims 1 to 9, characterised in that the switching mechanism has a bar (6), which is adjustable by means of the push-button (7) and has a cylindrical extension, the three-armed lever (19) of insulating material being rotatably mounted in the longitudinal slot in said extension, while the bar (6) itself is guided rotatably and displaceably in a gate of the housing and is supported opposite the lever (19) of insulating material by means of a control spring (20) which is in the form of a truncated cone.

11. Protective circuit breaker according to claims 1 to 4, characterised in that the wall plug is provided with the pin and safety contacts (1, 2) for the use of one of the plug connecting systems currently used (internationally) and/or a socket is provided at the location of the terminals (5) for the lead wire in the upper shell (17) of the housing in the form of an intermediate plug or an adapter.

12. Protective circuit breaker according to claims 1 and 11, characterised in that the circuit breaker, which is integrated with a separate safety contact socket and is electrically wired, is disposed in a surface-mounted housing and, in exchange for the usual outer cover of a fixedly installed (flush) socket, is insertable therewith in the socket insert of such a socket.

**Revendications**

1. Appareil disjoncteur de protection contre les courants de défaut, à déclenchement à minimum de tension (8) et avec possibilité de surveillance du conducteur de terre, réalisé sous forme de fiche de raccordement, dans lequel les trois conducteurs qui s'étendent depuis les broches de contact (1) et le contact de terre (2) de la fiche jusqu'aux bornes de raccordement (5), sont commutables manuellement sur tous les pôles par un bouton-poussoir (7) et passent ensemble, mais, en ce qui concerne le conducteur de terre, en sens inverse par rapport au conducteur de phase et au conducteur neutre, à travers un transformateur sommateur d'intensité (4) qui est muni d'un premier enroulement secondaire pour la commande d'une électronique (9), commutable au préalable sur le réseau par le bouton-poussoir (7), pour le déclenchement par courant différentiel et à minimum de tension par action électromagnétique sur le mécanisme (6) du système de contacts de commutation (3), et qui présente un second enroulement auxiliaire par l'intermédiaire duquel le conducteur de terre peut être raccordé, du côté branchement, en même temps au conducteur de phase et au conducteur neutre par des contacts de travail respectifs (23) d'une touche d'essai (11) et par un arrangement de résistances (12) monté en série.

2. Appareil disjoncteur de protection selon la revendication 1, caractérisé en ce que l'organe de déclenchement électromagnétique (8) est disposé à l'intérieur de la partie enfichable (normalisée) de la fiche, l'étrier de contact de terre (2) en forme d'U étant éventuellement utilisé (en même temps) comme culasse magnétique (13).

3. Appareil disjoncteur de protection selon les revendications 1 et 2, caractérisé en ce qu'à la partie enfichable de la fiche est fixé un boîtier en matière isolante de forme parallélépipédique, formé de deux demi-cuvettes, boîtier dont la cuvette inférieure (16) comporte un évidement vers la partie enfichable et, latéralement à côté de celui-ci, une ouverture de montage recouverte par un capot (24) qui peut être fixé par vissage, tandis que la cuvette supérieure (17), unie à la cuvette inférieure de façon indétachable par encliquetage, est munie d'ouvertures de passage pour le bouton-poussoir (7) et la touche d'essai (11).

4. Appareil disjoncteur de protection selon les revendications 1 et 3, caractérisé en ce que le système de contacts de commutation (3), qui peut être enclenché au moyen du bouton-poussoir (7) par l'intermédiaire du mécanisme de commutation (6) et qui peut être déclenché manuellement, électromagnétiquement ainsi que librement, l'électronique (9) pour le déclenchement par courant différentiel et à minimum de tension, qui est regroupée sur une plaquette de circuits imprimés avec un dispositif de contact (10) pour son alimentation en courant et pour la touche d'essai (11), le transformateur sommateur d'intensité (4), ainsi que les bornes de raccordement (5), qui sont placées en avant d'un serre-câble anti-arrachement (18) pour le câble de branchement, sont disposés côte à côte en direction longitudinale dans la cuvette inférieure (16) du boîtier, réalisée avec la forme appropriée.

5. Appareil disjoncteur de protection selon les revendications 1 et 4, caractérisé en ce que le bouton-poussoir (7), ayant une double fonction d'actionnement, pour actionner successivement le dispositif de contact (10) pour l'alimentation en courant de l'électronique (9) et le mécanisme de commutation (6) pour le système de contacts de commutation proprement dit (3), se compose de deux éléments partiels qui sont guidés coaxialement et télescopiquement l'un dans l'autre et dans le boîtier, et qui prennent appui l'un sur l'autre et sur une butée du boîtier au moyen de ressorts hélicoïdaux de compression ayant des rigidités différentes.

6. Appareil disjoncteur de protection selon les revendications 1, 4 et 5, caractérisé en ce que les pièces de contact mobiles (3) du système de contacts de commutation tripolaire, qui sont reliées aux bornes de raccordement (5) par des fils flexibles, sont portées par un levier (19) à trois bras, en matière isolante, qui est accouplé de façon mobile au mécanisme de commutation (6) sous l'action d'un ressort de commutation (20) et qui agit en trois points d'appui en ce qui concerne les pièces de contact fixes (15, 21).

7. Appareil disjoncteur de protection selon les revendications 1, 5 et 6, caractérisé en ce que les pièces de contact fixes (21) des trajets de commutation pour le conducteur de phase et pour le conducteur neutre, qui sont reliées aux deux broches (1) de la fiche, sont maintenues indirectement sur l'organe de déclenchement électromagnétique (8) ou latéralement au-dessus de celui-ci dans le boîtier.

8. Appareil disjoncteur de protection selon les revendications 1, 5 et 6, caractérisé en ce que le contact antagoniste de la pièce de contact mobile (3) du trajet de commutation pour le conducteur de terre est constitué par un prolongement de contact (15) de l'armature battante (14) de l'organe de déclenchement électromagnétique (8), armature qui est reliée de façon électriquement conductrice à l'étrier de contact de terre (2) dans la partie enfichable de la fiche.

9. Appareil disjoncteur de protection selon les revendications 1, 2 et 8, caractérisé en ce que l'armature battante (14), qui est montée mobile sur la culasse magnétique (13) de l'organe de déclenchement électromagnétique (8) et qui est sollicitée par un ressort de traction dans le sens opposé à sa direction d'attraction, est accouplée mécaniquement, au moyen de son prolongement de contact (15) et par l'intermédiaire d'un organe mobile d'entraînement (22) guidé dans le boîtier, au levier en matière isolante (19) du système de contacts de commutation (3).

10. Appareil disjoncteur de protection selon les revendications 1 à 9, caractérisé en ce que le mécanisme de commutation comporte une entretoise (6) déplaçable par le bouton-poussoir (7) et munie d'un appendice cylindrique dans la fente oblongue duquel le levier (19) à trois bras, en matière isolante, est monté à rotation, tandis que l'entretoise (6) est elle-même guidée de façon à pouvoir glisser et tourner dans une coulisse du boîtier, et elle prend appui sur le levier (19) en matière isolante au moyen d'un ressort de commutation tronconique (20).

11. Appareil disjoncteur de protection selon les revendications 1 à 4, caractérisé en ce que la fiche de raccordement est munie de broches de contact (1) et d'un contact de terre (2) pour l'utilisation de l'un des systèmes embrochables usuels (internationaux) de connexion et/ou est prévue à la manière d'une fiche intermédiaire ou d'un adaptateur d'une prise femelle de courant à la place des bornes de raccordement (5) pour les conducteurs d'amenée de courant dans la cuvette supérieure (17) du boîtier.

12. Appareil disjoncteur de protection selon les revendications 1 et 11, caractérisé en ce que l'appareil assemblé et câblé électriquement avec une prise de courant de sécurité séparée est disposé dans un boîtier de montage sur socle et peut être inséré avec celui-ci, en remplacement du couvercle extérieur usuel d'une prise de courant (encastrée) installée à poste fixe, dans le réceptacle de cette prise de courant.

FIG. 1

FIG. 2

FIG. 3

FIG. 4

FIG. 5